# EUROPÄISCHE PATENTSCHRIFT

(11) **EP 0 936 131 B1**
(45) Veröffentlichungstag und Bekanntmachung des Hinweises auf die Patenterteilung: **16.11.2005**
(21) Anmeldenummer: 99100778.2
(22) Anmeldetag: 16.01.1999
(51) Int. Cl.: B62D 33/067, B62D 33/07

(54) **Kippvorrichtung für abgefederte Fahrerhäuser von Nutzfahrzeugen**
Tilting apparatus for suspended cabs of trucks
Dispositif de basculement pour cabines suspendues de camions

(30) Priorität: 13.02.1998 DE 19805870
(43) Veröffentlichungstag der Anmeldung: 18.08.1999
(73) Patentinhaber: DaimlerChrysler AG, 70567 Stuttgart (DE)
(72) Erfinder: Bächle, Erwin, 70327 Stuttgart (DE)

(56) Entgegenhaltungen:
- EP-A- 0 384 005
- EP-A- 0 520 587
- EP-A- 0 520 588
- WO-A-93/19973
- WO-A-98/03389
- US-A- 3 958 659

## Beschreibung

Die Erfindung betrifft eine Kippvorrichtung für abgefederte Fahrerhäuser von Nutzfahrzeugen, gemäß dem Oberbegriff des Patentanspruchs 1. Eine solche gattungsgemäße Kippvorrichtung ist aus der EP 0 520 587A bekannt.

Bei einer weiteren bekannten Kippvorrichtung (DE 88 09 201 U1) ist der hydraulische Kippzylinder mit dem dem Fahrerhaus zugewandten Hubglied an einem Hebel angelenkt, der mit seinem anderen Ende an einer Konsole des Fahrerhauses schwenkbar gehalten ist,wobei dieser Hebel zur Führung des Hubgliedes des Kippzylinders dient, das am Ende der ausfahrbaren Kolbenstange einen Gelenkbolzen trägt, der zur Kippverstellung des Fahrerhauses mit einer fahrerhausseitigen besonderen Verriegelungseinrichtung in Eingriff gelangen kann. Die Verriegelungseinrichtung ist mit allen Elementen am Fahrerhaus angebracht. Sie weist einen zwischen zwei Endstellungen schwenkbeweglichen Fanghaken mit Öffnungsmaul auf, das den Gelenkbolzen des Hubgliedes des Kippzylinders aufnehmen kann. Der Fanghaken ist durch eine Feder in öffnungsrichtung des Fanghakens vorgespannt. Bestandteil der Verriegelungseinrichtung ist ferner eine zwischen zwei Endstellungen schwenkbar angelenkte Sperrklinke, die im Gegenuhrzeigersinn, also in Verriegelungsrichtung bezüglich des Fanghakens, vorgespannt ist. Ferner weist die Verriegelungseinrichtung einen hydraulischen Stellzylinder auf, dessen Stößel mit einem Nocken der Sperrklinke zusammenwirken kann. Alle vorgenannten Elemente der Verriegelungseinrichtung sind Teil des Fahrerhauses. Der Kippzylinder greift mit dem freien Ende seines Hubgliedes über den am Fahrerhaus schwenkbaren Hebel am Fahrerhaus an, wobei in der Fahrbetriebsstellung der Gelenkbolzen am freien Ende des Hubgliedes noch außer Eingriff mit dem Öffnüngsmaul und Fanghaken ist, so daß das Fahrerhaus ungehindert einfedern kann. Zu Beginn des Kippvorganges mit Ausschieben des Hubgliedes des Kippzylinders wird dessen freies Ende und damit dessen Gelenkbolzen, der zur Kippverstellung mit dem Fahrerhaus zusammenwirken soll, vom Hebel so gesteuert, daß nach einem gewissen Leerhub der Gelenkbolzen des Hubgliedes in das Fangmaul gelangt und der Fanghaken gegen die Vorspannkraft seiner Feder geschlossen wird. Die Sperrklinke wird durch Federkraft in eine Stellung geschwenkt, in der sie den Fanghaken so fixiert, daß dieser den Gelenkbolzen am Ende des Hubgliedes von unten her umfaßt. Dadurch ist der Kippzylinder nun mit dem Fahrerhaus verbunden, das nur noch die ihm durch den Hubzylinder aufgezwungene Bewegung ausführen kann. Nach Überschreiten der labilen Gleichgewichtslage des Fahrerhauses wirkt auf den Kippzylinder eine Zugkraft, die über den den Gelenkbolzen unterfassenden Fanghaken übertragen wird und die Sperrklinke in der Sperrstellung fixiert. Beim Zurückschwenken des Fahrerhauses wird die Sperrklinke durch den zugeordneten Stellzylinder wieder in die Ausgangslage zurückgestellt und nach vollständigem Einfahren des Hubgliedes der Fanghaken durch seine Federkraft im Uhrzeigersinn geschwenkt und somit geöffnet.

Eine solche Kippeinrichtung ermöglicht zwar eine ungehinderte freie Federung des Fahrerhauses in der Fahrbetriebsstellung. Jedoch ist die Verriegelungseinrichtung mit den erläuterten einzelnen Komponenten kompliziert aufgebaut, wobei deren Betriebssicherheit nicht unbedingt gewährleistet ist, zumal der Fanghaken und auch die Sperrklinke jeweils von Rückstellfedern belastet sind, die auf Dauer störanfällig sind und eine störungsfreie Funktion in Frage stellen können.

Der Erfindung liegt die Aufgabe zugrunde, eine Kippvorrichtung der eingangs genannten Art zu schaffen, die einfach und kostengünstig und betriebssicher ist und bei freier ungehinderter Federung des Fahrerhauses in der Fahrbetriebsstellung beim Übergang in dessen Kippstellung eine automatische Kippsicherung des Fahrerhauses gegen Abkippen nach vorn gewährleistet.

Die Aufgabe ist bei einer Kippvorrichtung der eingangs genannten Art gemäß der Erfindung durch die Merkmale im Anspruch 1 gelöst. Hierbei greift der Kippzylinder nicht unmittelbar am Fahrerhaus an, sondern vielmehr am Hebel, der am Fahrzeugrahmen schwenkbar gelagert ist und in der Fahrbetriebsstellung des Fahrerhauses außer Eingriff mit diesem ist und erst nach Durchfahren eines Leerhubs des Kippzylinders und eines Leerwegs des Hebels am Fahrerhaus dergestalt angreift, daß erst dann das fahrerhausseitige Eingriffsglied in Verriegelungseingriff mit der Riegelaufnahme gelangt. Aufgrund dieser Gestaltung und der Riegelaufnahme wird erreicht, daß das Eingriffsglied bei Kippbeginn ab einem bestimmten Kippwinkel automatisch zwangsgeführt wird und somit eine unkontrollierte Kippbewegung des Fahrerhauses während des Kippvorganges vermieden ist. Insgesamt wird dadurch ein harmonischer Kippabläuf erreicht. Die Verriegelungseinrichtung ist einfach, da kaum zusätzliche Bauteile notwendig sind, kostengünstig und betriebssicher.

Weitere besondere Erfindungsmerkmale und/oder Ausgestaltungen der Erfindung ergeben sich aus den Unteransprüchen. Weitere Einzelheiten und Vorteile der Erfindung ergeben sich aus der nachfolgenden Beschreibung.

Die Erfindung ist nachfolgend anhand eines in den Zeichnungen gezeigten Ausführungsbeispieles näher erläutert. Es zeigen:
- Fig. 1: eine schematische perspektivische Ansicht von Teilen eines Fahrzeugrahmens und eines Fahrerhauses eines Nutzfahrzeuges mit Kippvorrichtung,
- Fig. 2: eine schematische Seitenansicht von Teilen der Kippvorrichtung, die mit durchgezogenen Linien in der Fahrbetriebsstellung und mit gestrichelten Linien in einer Kippstellung des Fahrerhauses gezeigt sind,

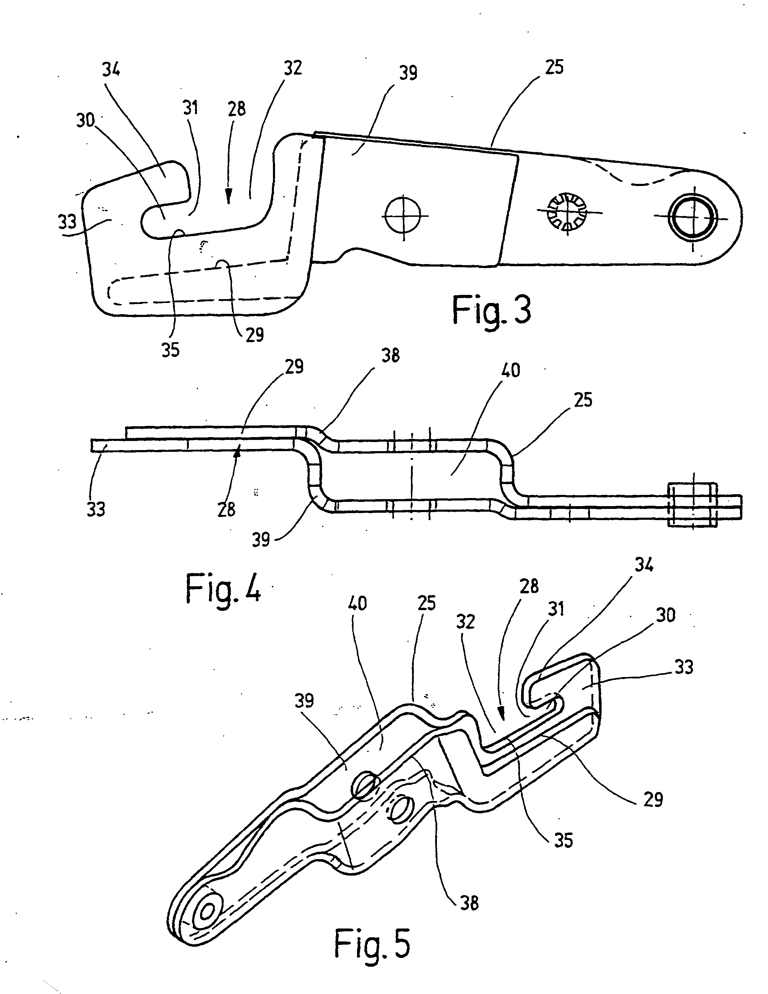

- Fig. 3: eine schematische Seitenansicht eines Hebels der Kippvorrichtung,
- Fig. 4: eine schematische Draufsicht des Hebels in in Fig. 3,
- Fig. 5: eine schematische perspektivische Ansicht des Hebels in Fig. 3 und 4.

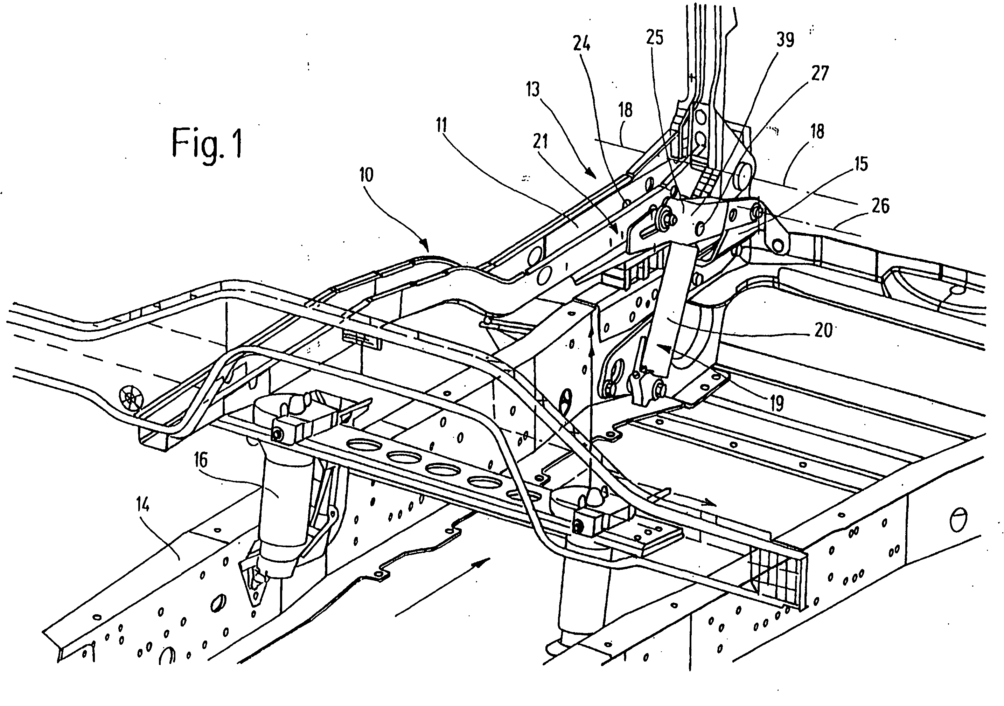

Kippbare Fahrerhäuser, insbesondere für Nutzfahrzeuge, z.B. Lastkraftwagen, sind in vielfacher Form bekannt (z. B. DE 88 09 201 U1). Einzelheiten der vorderen Lagerung und sonstigen Details derartiger Fahrerhäuser bedürfen daher hier keiner besonderen Beschreibung. In Fig. 1 ist lediglich ein Teil eines Fahrerhauses 10 gezeigt, der hier aus einem Längsträger 11 mit Konsole 12 besteht. Das Fahrerhaus 10 ist mit einer Kippvorrichtung 13 versehen, deren Elemente auf jeder Längsseite eines Fahrzeugrahmens 14 angeordnet sind. Besondere Einzelheiten des Fahrzeugrahmens 14 sind nicht gezeigt, sondern lediglich ein hochragender vorderer Lagerbock 15 als Teil des Fahrzeugrahmens 14. Das Fahrerhaus 10 ist in Bezug auf den Fahrzeugrahmen 14 bei 16 abgefedert.

Am in Fahrtrichtung gemäß Pfeil 17 vorderen Bereich ist das Fahrerhaus 10 am Fahrzeugrahmen 14 um eine Schwenkachse 18 schwenkbar gelagert. Die Schwenkachse 18 verläuft im wesentlichen horizontal und dabei quer zur Fahrtrichtung gemäß Pfeil 17. Die Kippvorrichtung weist ferner einen Kippantrieb 19 auf, der hier aus einem hydraulischen Kippzylinder 20 besteht, der mit seinem unteren Ende schwenkbar am Fahrzeugrahmen 14 angelenkt ist und zur Schwenkung des Fahrerhauses 10 um dessen Schwenkachse 18 und Hochkippen in Fahrtrichtung nach vorn dient.

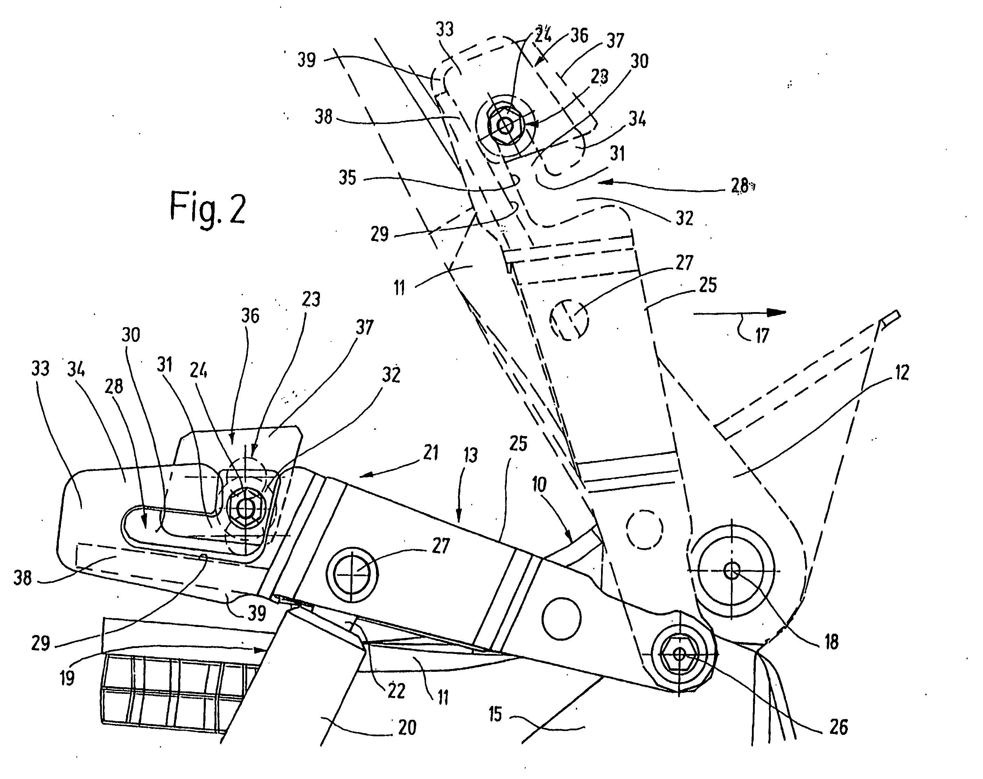

Die Kippvorrichtung 13 weist eine Verriegelungseinrichtung 21 auf, die vom Hubglied 22 des Kippzylinders 20 derart steuerbar ist, daß das Fahrerhaus 10 in der Fahrbetriebsstellung, die in Fig. 2 mit durchgezogenen Linien angedeutet ist, ungehindert in etwa vertikaler Richtung nach unten einfedern kann und mit Einleitung des Kippvorganges nur noch eine durch den Kippzylinder 20 aufgezwungene Kippbewegung nach vorn hin, z. B. bis zu einem Kippwinkel von 55°, wie in Fig. 2 mit gestrichelten Linien angedeutet ist, oder mehr, ausführen kann.

Die Verriegelungseinrichtung 21 weist ein am Fahrerhaus 10 gehaltenes Eingriffsglied 23 z. B. in Form eines daran festen, quergerichteten Bolzens 24, und ferner zumindest einen Hebel 25 in Gestalt eines Kipphebels oder einer Schwinge auf, wobei der Hebel 25 mit seinem in Fahrtrichtung gemäß Pfeil 17 vorn befindlichen Ende am Fahrzeugrahmen 14 um eine Lagerachse 26 schwenkbar gelagert ist, die im wesentlichen parallel zur Schwenkachse 18 des Fahrerhauses 10 verläuft. Am Hebel 25 ist in Abstand von der Lagerachse 26 der Kippzylinder 20 mit seinem Hubglied 22 mittels eines Lagerbolzens 27 angelenkt. Der Hebel 25 weist an dem anderen Ende, das dem um die Lagerachse 26 gelagerten Ende gegenüberliegt, eine Riegelaufnahme 28 auf, die dem Eingriffsglied 23 am Fahrerhaus 10 zugeordnet ist. In der Fahrbetriebsstellung ist das Eingriffsglied 23 außer Eingriff mit der Riegelaufnahme 28 und mit dem Hebel 25. Das Fahrerhaus 10 kann somit in der Fahrbetriebsstellung frei federn, so daß das Federsystem nicht blockiert ist. Es besteht ein entsprechender Freiweg zwischen dem Eingriffsglied 23 einerseits und der Riegelaufnahme 28 andererseits. Bei Einleitung des Kippvorganges gelangt das Eingriffsglied 23 nach einem Leerhub des Kippzylinders 20 und Leerweg des Hebels 25 in Verriegelungseingriff mit der Riegelaufnahme 28, wie in Fig. 2 gestrichelt dargestellt ist. In dieser Weise ist die Kippvorrichtung 13 mit einer automatischen Kippsicherung versehen.

Die Riegelaufnahme 28 weist ein Langloch 30 auf, das eine zur Lagerachse 26 des Hebels 25 und somit zur Schwenkachse 18 des Fahrerhauses 10 hin offene Öffnung 31 am einen Ende aufweist, über die das fahrerhausseitige Eingriffsglied 23 in das Langloch 30 einfahrbar ist. Ferner weist die Riegelaufnahme 28 einen quer zum Längsverlauf des Hebels 25 gerichteten Einfahrschlitz 32 auf, der nach oben hin zum Einfahren des Eingriffsgliedes 23 geöffnet ist und über die Öffnung 31 des Langloches 30 in dieses überleitet. Das Langloch 30 und der Einfahrschlitz 32 bilden somit zusammen einen etwa winkelförmigen Schlitz. Die Riegelaufnahme 28 ist durch ein Hakenteil 33 am Ende des Hebels 25 gebildet, wobei der obere Hakenschenkel 34 des Hakenteils 33 zur Lagerachse 26 des Hebels 25 hin gerichtet ist.

Bei einem nicht gezeigten Ausführungsbeispiel kann die Bodenfläche des Langloches 30, die sich mit Abstand unterhalb des Hakenschenkels 34 erstreckt, eine obere Stützfläche, z. B. Gleitbahn, bilden. Das fahrerhausseitige Eingriffsglied 23 befindet sich in der Fahrbetriebsstellung oberhalb einer solchen Bodenfläche 35 als Stützfläche und in etwa vertikalem Abstand davon. Nach Durchfahren des Leerhubs des Kippzylinders 20 und des Leerweges des Hebels 25 kann das Eingriffsglied 23 an dieser Bodenfläche 35 zur Anlage kommen und bei weiterer Schwenkbewegung des Hebels 25 relativ zu dieser Bodenfläche 35 bewegbar, z. B. verschiebbar, sein. Beim gezeigten Ausführungsbeispiel ist zusätzlich zur Bodenfläche 35 des Langlochs 30 eine obere Stützfläche 29, z. B. Gleitbahn, am Hebel 25 vorgesehen, die in Abstand von und unterhalb der Bodenfläche 35 des Langloches sowie mit seitlichem Versatz davon verläuft. Das Eingriffsglied 23, insbesondere dessen Bolzen 24, ist so bemessen, daß es, insbesondere der Bolzen 24, in den Einfahrschlitz 32 und in das Langloch 30 hineinpaßt, so daß der Bolzen 24 somit in der Riegelaufnahme 28 formschlüssig aufnehmbar ist.

Auf dem Bolzen 24 ist ein Führungsglied 36, z. B. eine nicht gezeigte Rolle oder ein Gleitstein 37, gelagert, und zwar im Bereich oberhalb der oberen Stützfläche 29, z. B. Gleitbahn. Das Führungsglied 36, insbesondere der Gleitstein 37, kann nach Durchfahren des Leerhubes des Kippzylinders 20 und des Leerweges des Hebels 25 beim Einleiten der Kippbewegung mit der Stützfläche 29, z. B. Gleitbahn, in Berührung gelangen und ist dann bei weiterer Schwenkbewegung auf der Stützfläche 29 relativ dazu bewegbar, z. B. verschiebbar.

Dient bei einem nicht gezeigten Ausführungsbeispiel die Bodenfläche 35 des Langloches 30 als obere Stützfläche, z. B. Gleitbahn, und weist das fahrerhausseitige Eingriffsglied 23 nur den Bolzen 24 auf, so gelangt der Bolzen 24 in Berührung mit der Bodenfläche 35, relativ zu dieser er bei weiterer Kippbewegung bewegbar, z. B. verschiebbar, ist.

Die Lagerachse 26 des Hebels 25 verläuft in vertikalem Abstand von und unterhalb der Schwenkachse 18 des Fahrerhauses 10. Ferner verläuft die Lagerachse 26 des Hebels 25 entgegen der Fahrtrichtung in horizontalem Abstand von der Schwenkachse 18. Aufgrund dieser unterschiedlichen Anordnung der Schwenkachse 18 und der Lagerachse 26 ergeben sich bei der Kippbewegung verschiedene Bahnverläufe von Fahrerhaus 10 und Hebel 25, wobei dieser Effekt für die Kippsicherung ausgenutzt wird. Betrachtet man die Relativstellung des Bolzens 24 zur Stellung des Hebels 25 in der Fahrbetriebsstellung und im Vergleich dazu in der in Fig. 2 gestrichelt angedeuteten 55°-Kippstellung, so ist der Bolzen 24 entgegen der Fahrtrichtung verschoben. Aufgrund der Gestaltung der Riegelaufnahme 28 ist somit erreicht, daß der Bolzen 24 ab Erreichen eines bestimmten Kippwinkels automatisch zwangsgesteuert wird. Damit wird eine unkontrollierte Kippbewegung des Fahrerhauses 10 während des Kippvorganges vermieden. Insgesamt wird durch die Kippvorrichtung 13 ein harmonischer Kippablauf erreicht. Dadurch, daß in der Kippstellung der Bolzen 24 in das Langloch 30 einfährt, ist im Verlauf des Ankippens des Fahrerhauses 10 ein etwaiges freies Nachvornfallen des Fahrerhauses 10 vermieden aufgrund der automatischen Kippsicherung zwischen dem Bolzen 24 und dem Hebel 25. Nicht nur beim Ankippen sondern auch beim Zurückkippen des Fahrerhauses 10 ist ein etwaiges Zurückfallen dieses ebenso vermieden wie beim Ankippen ein Fallen nach vorn, so daß daraus resultiernde etwaige Schäden am Fahrerhaus 10, an der Fahrerhauslagerung und der Kippvorrichtung 13 aufgrund der besonderen Gestaltung mit integrierter Kippsicherung vermieden sind. In der Fahrbetriebsstellung kann das Fahrerhaus 10 aufgrund des Freiweges zwischen dem Bolzen 24 und der Bodenfläche 35 und aufgrund des Freiweges zwischen dem Führungsglied 36, insbesondere Gleitstein 37, und der oberen Stützfläche 29 ungehindert federn. In dieser Stellung ist das Fahrerhaus 10 nicht mit dem Hebel 25 und dem Kippzylinder 20 gekoppelt.

Der Hebel 25 weist beim gezeigten Ausführungsbeispiel zwei Hebelteile 38 und 39 auf, die mit ihren Breitseiten aneinandergelegt und fest zu einer Einheit miteinander verbunden sind. Der erste Hebelteil 38 weist die oberseitige Stützfläche 29, z. B. Gleitbahn, auf und verläuft bei der Darstellung in Fig. 1 z. B. außen. Der zweite Hebelteil 39 enthält die Riegelaufnahme 28. Beide Hebelteile verlaufen auf dem Längenbereich, der sich zwischen der Lagerachse 26 und der Riegelaufnahme 28 befindet, mit Querabstand voneinander unter Bildung einer Aufnahme 40 dazwischen. Die Aufnahme 40 nimmt das Hubglied 22 des Kippzylinders 20 auf, das in der Aufnahme 40 mittels des Lagerbolzens 27 schwenkbar gelagert ist. In den beidseitig des Lagerbolzens 27 sich erstreckenden Endbereichen liegen beide Hebelteile 38, 39 flächig aneinander an, wobei eine feste Verbindung beider z. B. durch Schweißen hergestellt sein kann.

## Patentansprüche

1. Kippvorrichtung für abgefederte Fahrerhäuser (10) von Nutzfahrzeugen, die am Fahrzeugrahmen (14) um eine etwa horizontale, quer verlaufende Schwenkachse (18) schwenkbar gelagert und mittels zumindest eines am Fahrzeugrahmen (14) angelenkten Kippzylinders (20) um die Schwenkachse (18) nach vorn hochkippbar sind, mit einer Verriegelungseinrichtung (21), die vom Hubglied (22) des Kippzylinders (20) derart steuerbar ist, daß das Fahrerhaus (10) in der Fahrbetriebsstellung ungehindert einfedern kann und mit Einleitung des Kippvorganges nur noch eine ihm durch den Kippzylinder (20) aufgezwungene Kippbewegung ausführen kann, wobei die Verriegelungseinrichtung (21) ein am Fahrerhaus (10) gehaltenes Eingriffsglied (23) und zumindest einen um eine zur Schwenkachse (18) des Fahrerhauses (10) im wesentlichen parallele Lagerachse (26) schwenkbar gelagerten Hebel (25) aufweist, wobei der Hebel (25) mit einer dem Eingriffsglied (23) zugeordneten Riegelaufnahme (28) für dieses versehen ist und wobei das Eingriffsglied (23) bei Einleitung des Kippvorganges nach einem Leerhub des Kippzylinders (20) und Leerweg des Hebels (25) in Verriegelungseingriff mit der Riegelaufnahme (28) gelangt
**dadurch gekennzeichnet,**
**daß** der Hebel (25) am fahrzeugrahmen (14), gelagert ist und an dem Hebel (25) im Abstand von dieser Lagerachse (26) das Hubglied (22) des Kippzylinders (20) angelenkt ist.

2. Kippvorrichtung nach Anspruch 1,
**dadurch gekennzeichnet,**
**daß** die Riegelaufnahme (28) eine obere Stützfläche (29;35), z.B. eine Gleitbahn, aufweist und daß das fahrerhausseitige Eingriffsglied (23) sich oberhalb der Stützfläche (29;35) und in etwa vertikalem Abstand davon befindet und nach Durchfahren des Leerhubs des Kippzylinders (20) und des Leerweges des Hebels (25) an der Stützfläche (29;35) zur Anlage gelangt und relativ zu dieser bewegbar, z.B. verschiebbar, ist.

3. Kippvorrichtung nach Anspruch 1 oder 2,
**dadurch gekennzeichnet,**
**daß** die Riegelaufnahme (28) ein Langloch (30) aufweist, das eine zur Lagerachse (26) des Hebels (25) hin offene Öffnung (31) am einen Ende aufweist, über die das fahrerhausseitige Eingriffsglied (23) in das Langloch (30) einfahrbar ist.

4. Kippvorrichtung nach Anspruch 3,
**dadurch gekennzeichnet,**
**daß** die Riegelaufnahme (28) einen quer zum Längsverlauf des Hebels (25) gerichteten Einfahrschlitz (32) aufweist, der nach oben hin zum Einfahren des Eingriffsgliedes (23) geöffnet ist und über die Öffnung (31) des Langloches (30) in dieses überleitet.

5. Kippvorrichtung nach Anspruch 3 oder 4,
**dadurch gekennzeichnet,**
**daß** die Riegelaufnahme (28) durch einen Hakenteil (33) am Ende des Hebels (25) gebildet ist, dessen oberer Hakenschenkel (34) zur Lagerachse (26) des Hebels (25) hin gerichtet ist.

6. Kippvorrichtung nach einem der Ansprüche 2 bis 5,
**dadurch gekennzeichnet,**
**daß** die Stützfläche, z.B. Gleitbahn, durch die Bodenfläche (35) des Langlochs (30) gebildet ist.

7. Kippvorrichtung nach einem der Ansprüche 2 bis 5,
**dadurch gekennzeichnet,**
**daß** die Stützfläche (29), z.B. Gleitbahn, in Abstand von und unterhalb der Bodenfläche (35) des Langlochs (30) sowie mit seitlichen Versatz davon verläuft.

8. Kippvorrichtung nach einem der Ansprüche 1 bis 7,
**dadurch gekennzeichnet,**
**daß** das fahrerhausseitige Eingriffsglied (23) einen quer gerichteten Bolzen (24) aufweist, der in der Riegelaufnahme (28) aufnehmbar ist.

9. Kippvorrichtung nach Anspruch 8,
**dadurch gekennzeichnet,**
**daß** auf dem Bolzen (24) ein Führungsglied (36), z.B. eine Rolle, ein Gleitstein (37) od.dergl., gelagert ist,
das mit der Stützfläche (29), z.B. Gleitbahn, in Berührung gelangen kann und auf dieser relativ dazu bewegbar, z.B. verschiebbar, ist.

10. Kippvorrichtung nach Anspruch 8,
**dadurch gekennzeichnet,**
**daß** der Bolzen (24) mit der Stützfläche (29), z.B. Gleitbahn, in Berührung gelangen kann und auf dieser relativ dazu verschiebbar ist.

11. Kippvorrichtung nach einem der Ansprüche 1 bis 10,
**dadurch gekennzeichnet,**
**daß** die Lagerachse (26) des Hebels (25) im ungekippten Zustand des Fahrerhauses in vertikalem Abstand von und unterhalb der Schwenkachse (18) des Fahrerhauses (10) verläuft.

12. Kippvorrichtung nach einem der Ansprüche 1 bis 11,
**dadurch gekennzeichnet,**
**daß** die Lagerachse (26) des Hebels (25) entgegen der Fahrtrichtung in horizontalem Abstand von der Schwenkachse (18) des Fahrerhauses (10) verläuft.

13. Kippvorrichtung nach einem der Ansprüche 1 bis 12,
**dadurch gekennzeichnet,**
**daß** der Hebel (25) einen ersten Hebelteil (38), der die oberseitige Stützfläche (29), z.B. Gleitbahn, trägt, und einen die Riegelaufnahme (28) enthaltenden zweiten Hebelteil (39) aufweist, die beide miteinander fest verbunden sind. -

14. Kippvorrichtung nach Anspruch 13,
**dadurch gekennzeichnet,**
**daß** die Hebelteile (38,39) auf dem Längenbereich, der sich zwischen der Lagerachse (26) und der Riegelaufnahme (28) des Hebels (25) befindet, mit Querabstand voneinander verlaufen und dazwischen eine Aufnahme (40) bilden, die das Hubglied (22) des Kippzylinders (20) aufnimmt, das in der Aufnahme (40) mittels eines in beiden Hebelteilen (38,39) gehaltenen Lagerbolzens (27) schwenkbar gelagert ist.

## Claims

1. Tilting mechanism for resiliently suspended driver's cabs (10) of utility vehicles, which are mounted on the vehicle chassis (14) so as to be pivotable about a more or less horizontal, transversely extending pivot axis (18) and can be tilted upwards and forwards about the pivot axis (18) by means of at least one tilting cylinder (20) mounted in an articulating arrangement on the vehicle chassis (14), having a locking mechanism (21) which can be controlled by the lifting member (22) of the tilting cylinder (20) so that the driver's cab (10) is able to move resiliently up and down unobstructed in the driving position, and when the tilting process is initiated, is able to effect only a tilting movement imposed on it by the tilting cylinder (20), which locking mechanism (21) has a locking member (23) retained on the driver's cab (10) and at least one arm (25) mounted so as to be pivotable about a pivot axis (18) of the driver's cab (10) essentially parallel with the bearing axis (26), which arm (25) is provided with a bolt holder (28) cooperating with the locking member (23) specifically provided for it and when the tilting process is initiated, the locking member (23) moves into locking engagement with the bolt holder (28) after the tilting cylinder (20) has effected a no-load stroke and the arm (25) has covered a no-load path,
**characterised in that**
the arm (25) is mounted on the vehicle chassis (14) and the lifting member (22) of the tilting cylinder (20) is mounted in an articulating arrangement on the arm (25) at a distance from said bearing axis (26).

2. Tilting mechanism as claimed in claim 1,
**characterised in that**
the bolt holder (28) has a top support surface (29; 35), e.g. a slide track, and the locking member (23) on the driver's cab side is disposed above the support surface (29; 35) and at an approximately vertical distance therefrom, and moves into contact with the support surface (29; 35) so as to be displaceable, e.g. slidable, relative thereto once the tilting cylinder (20) has effected a no-load stroke and the arm (25) has covered a no-load path.

3. Tilting mechanism as claimed in claim 1 or 2,
**characterised in that**
the bolt holder (28) has a slot (30) with an opening (31) at one end opening towards the bearing axis (26) of the arm (25) by means of which the locking member (23) on the driver's cab side can be inserted in the slot (30).

4. Tilting mechanism as claimed in claim 3,
**characterised in that**
the bolt holder (28) has an insertion slit (32) oriented transversely to the longitudinal extension of the arm (25) which opens upwards to allow the locking member (23) to be inserted and moved through the opening (31) of the slot (30) and into the latter.

5. Tilting mechanism as claimed in claim 3 or 4,
**characterised in that**
the bolt holder (28) is provided in the form of a hook part (33) on the end of the arm (25), the top hook leg (34) of which is directed towards the bearing axis (26) of the arm (25).

6. Tilting mechanism as claimed in one of claims 2 to 5,
**characterised in that**
the support surface, e.g. slide track, is formed by the base surface (35) of the slot (30).

7. Tilting mechanism as claimed in one of claims 2 to 5,
**characterised in that**
the support surface (29), e.g. slide track, extends at a distance from and underneath the base surface (35) of the slot (30) and is laterally offset therefrom.

8. Tilting mechanism as claimed in one of claims 1 to 7,
**characterised in that**
the locking member (23) on the driver's cab side has a transversely oriented bolt (24), which can be accommodated in the bolt holder (28).

9. Tilting mechanism as claimed in claim 8,
**characterised in that**
a guide member (36), e.g. a roller, a slide block (37) or similar, is mounted on the bolt (24) which is able to move into contact with the support surface (29), e.g. slide track, and is able to move, e.g. slide, thereon and relative thereto.

10. Tilting mechanism as claimed in claim 8,
**characterised in that**
the bolt (24) is able to move into contact with the support surface (29), e.g. slide track and is able to slide thereon and relative thereto.

11. Tilting mechanism as claimed in one of claims 1 to 10,
**characterised in that**
when the driver's cab is in the non-tilted state, the bearing axis (26) of the arm (25) extends at a vertical distance from and underneath the pivot axis (18) of the driver's cab (10) .

12. Tilting mechanism as claimed in one of claims 1 to 11,
**characterised in that**
the bearing axis (26) of the arm (25) extends opposite the driving direction at a horizontal distance from the pivot axis (18) of the driver's cab (10).

13. Tilting mechanism as claimed in one of claims 1 to 12,
**characterised in that**
the arm (25) has a first arm part (38) which bears the top-end support surface (29), e.g. slide track, and a second arm part (39) containing the bolt holder (28), the two being fixedly connected to one another.

14. Tilting mechanism as claimed in claim 13,
**characterised in that**
the arm parts (38, 39) are disposed on the lengthways region disposed between the bearing axis (26) and the bolt holder (28) of the arm (25), extending at a transverse distance apart forming a holder (40) between them which accommodates the lifting member (22) of the tilting cylinder (20), which is mounted in the holder (40) so as to be pivotable by means of a bearing bolt (27) retained in the two arm parts (38, 39).

## Revendications

1. Dispositif de basculement pour cabines suspendues (10) de camions, logées au niveau du châssis du véhicule (14) de façon pivotante autour d'un axe de pivotement (18) approximativement horizontal et s'étendant pour l'essentiel transversalement, et pouvant être basculées vers l'avant autour de l'axe de pivotement (18) au moyen d'au moins un vérin de basculement (20) articulé au niveau du châssis du véhicule (14), comprenant un dispositif de verrouillage (21) pouvant être commandé par l'organe de course (22) du vérin de basculement (20) de telle sorte que la cabine (10) peut être suspendue sans entrave dans la position de conduite et, avec l'introduction du processus de basculement, ne peut plus exécuter qu'un mouvement de basculement imposé par le vérin de basculement (20), le dispositif de verrouillage (21) présentant un moyen d'engrènement (23) maintenu au niveau de la cabine (10) et au moins un levier (25) logé de façon pivotante autour d'un axe de palier (26) pour l'essentiel parallèle à l'axe de pivotement (18) de la cabine (10), le levier (25) étant pourvu d'un logement de verrouillage (28) associé à l'organe d'engrènement (23) et l'organe d'engrènement (23), lors de l'introduction du processus de basculement, après une course à vide du vérin de basculement (20) et une course à vide du levier (25), s'engrenant de manière verrouillée avec le logement de verrouillage (28), **caractérisé en ce que** le levier (25) est logé au niveau du châssis du véhicule (14), et au niveau du levier (25), à distance de cet axe de palier (26), est articulé l'organe de course (22) du vérin de basculement (20).

2. Dispositif de basculement selon la revendication 1, **caractérisé en ce que** le logement de verrouillage (28) présente une surface d'appui supérieure (29 ; 35), par exemple une glissière, et l'organe d'engrènement côté cabine (23) se trouve au-dessus de la surface d'appui (29 ; 35) et à une certaine distance verticale de celle-ci et, après la course à vide du vérin de basculement (20) et la course à vide du levier (25), vient reposer conter la surface d'appui (29 ; 35) et est mobile, par exemple déplaçable, par rapport à celle-ci.

3. Dispositif de basculement selon la revendication 1 ou 2, **caractérisé en ce que** le logement de verrouillage (28) présente un trou oblong (30) possédant à une extrémité une ouverture (31) ouverte vers l'axe de palier (26) du levier (25), par le biais de laquelle l'organe d'engrènement (23) côté cabine peut être inséré dans le trou oblong (30).

4. Dispositif de basculement selon la revendication 3, **caractérisé en ce que** le logement de verrouillage (28) présente une fente d'insertion (32) orientée transversalement par rapport au tracé longitudinal du levier (25), qui est ouverte vers le haut pour l'insertion de l'organe d'engrènement (23) et qui dépasse dans le trou oblong (30) par l'ouverture (31) de celui-ci.

5. Dispositif de basculement selon la revendication 3 ou 4, **caractérisé en ce que** le logement de verrouillage (28) est formé par une partie de crochet (33) à l'extrémité du levier (25), dont la branche de crochet supérieure (34) est orientée vers l'axe de palier (26) du levier (25).

6. Dispositif de basculement selon l'une des revendications 2 à 5, **caractérisé en ce que** la surface d'appui, par exemple la glissière, est formée par la surface de fond (35) du trou oblong (30).

7. Dispositif de basculement selon l'une des revendications 2 à 5, **caractérisé en ce que** la surface d'appui (29), par exemple la glissière, s'étend à distance de la surface de fond (35) du trou oblong (30), en dessous de celle-ci et de manière latéralement décalée par rapport à celle-ci.

8. Dispositif de basculement selon l'une des revendications 1 à 7, **caractérisé en ce que** l'organe d'engrènement côté cabine (23) présente un boulon (24) orienté transversalement, pouvant être reçu dans le logement de verrouillage (28).

9. Dispositif de basculement selon la revendication 8, **caractérisé en ce que** sur le boulon (24) est logé un organe de guidage (36), par exemple une roulette, un coulisseau (37) ou analogue, qui peut entrer en contact avec la surface d'appui (29), par exemple la glissière, et qui est alors mobile, par exemple déplaçable, sur celle-ci.

10. Dispositif de basculement selon la revendication 8, **caractérisé en ce que** le boulon (24) peut entrer en contact avec la surface d'appui (29), par exemple la glissière, et est alors mobile sur celle-ci.

11. Dispositif de basculement selon l'une des revendications 1 à 10, **caractérisé en ce que** l'axe de palier (26) du levier (25), dans l'état non basculé de la cabine, s'étend à une certaine distance verticale de l'axe de pivotement (18) de la cabine (10), en-dessous de celui-ci.

12. Dispositif de basculement selon l'une des revendications 1 à 11, **caractérisé en ce que** l'axe de palier (26) du levier (25) s'étend à l'opposé de la direction de conduite à une certaine distance horizontale de l'axe de pivotement (18) de la cabine (10).

13. Dispositif de basculement selon l'une des revendications 1 à 12, **caractérisé en ce que** le levier (25) présente une première partie de levier (38) qui comporte la surface d'appui supérieure (29), par exemple la glissière, et une deuxième partie de levier (39) qui contient le logement de verrouillage (28), les deux parties étant fixement reliées entre elles.

14. Dispositif de basculement selon la revendication 13, **caractérisé en ce que** les parties de levier (38, 39) s'étendent, sur la zone longitudinale située entre l'axe de palier (26) et le logement de verrouillage (28) du levier (25), à une certaine distance transversale l'une de l'autre et forment entre elles un logement (40) recevant l'organe de course (22) du vérin de basculement (20) qui est logé de façon pivotante dans le logement (40) au moyen d'un tourillon (27) maintenu dans les deux parties de levier (38, 39).
